Europäisches Patentamt

European Patent Office

Office européen des brevets

(19)

(11) Publication number: **0 030 855**
A2

(12)

# EUROPEAN PATENT APPLICATION

(21) Application number: 80304495.7

(22) Date of filing: 12.12.80

(51) Int. Cl.³: **H 02 M 1/08**

(30) Priority: 14.12.79 GB 7943215

(43) Date of publication of application:
24.06.81 Bulletin 81/25

(84) Designated Contracting States:
BE CH DE FR IT LI NL SE

(71) Applicant: WESTINGHOUSE BRAKE AND SIGNAL
COMPANY LIMITED
Foundry Lane
Chippenham Wiltshire SN15 1RT(GB)

(72) Inventor: Hargis, Colin, Dr
36 Richmond Street Totterdown
Bristol BS3 4TQ(GB)

(74) Representative: Page, Edmund John
WESTINGHOUSE BRAKE AND SIGNAL COMPANY
LIMITED
Chippenham Wiltshire SN15 1JD(GB)

(54) Base current control means for a switching transistor.

(57) The base current for a switching transistor in e.g. a bridge inverter must be sufficient to maintain saturation of the transistor during conduction, and thus is a large proportion of the collector current. A base current control means must therefore have a high current gain and still be capable of short switching time.

Current from a d.c. supply is controlled by a pulse width modulated switching regulator (1) according to the magnitude of base current required. An inverter (3) is operated to control the variation of current with respect to time to provide a forward drive base current to turn-on the switching transistor (Tr5). A reverse drive pulse to turn-off the transistor is provided by a reverse pulse generator (5) connected to the switching regulator (1) in parallel with the forward drive inverter (3).

./...

EP 0 030 855 A2

Croydon Printing Company Ltd

FIG.1

Base current control means for a switching transistor

The present invention relates to base current control means for a switching transistor, for example, to provide base drive current control for bi-polar power transistors in switching power converters, such as d.c. chopper regulators and inverters. It is particularly, but not exclusively for use, in circuits using fast-switching transistors at high switching rates including pulse-width-modulation inverters.

For transistors for use in such arrangements it is difficult to combine large current gain with high current and voltage rating and short switching time, thus the forward base current needed to keep a transistor saturated during a conduction period is a fairly large proportion of the collector current, typically approximately one fifth. In order to turn-off a transistor quickly at the end of a conduction period and to minimise switching losses, a pulse of reverse base current of about the same amplitude as the forward base current is required. Also, the rise time of forward current and the transition time from forward drive current to the reverse drive current should be commensurate with the rise and fall time capabilities of the transistor.

In addition, to constraints imposed on base drive current circuits by switching transistor characteristics, it is frequently necessary to electrically isolate a switching power transistor and its low-power base drive control circuits from each other, particularly in an inverter where the emitters of various transistors may be at different potentials.

In a prior art circuit, designed to meet these requirements there is provided an isolated current supply for the base drive circuit and the base current is switched by means of a switching transistor controlled via an isolating link comprising an opto-coupler. However, there are several problems inherent in such a technique, for example; firstly, the transistor actually switching the base current has to possess a high current rating and dissipate considerable power. Second, the drive circuit efficiency is lowered because the voltage-drop in the controlling transistor and the margins needed to allow for variations in supply voltage and the transistor characteristics require a high supply voltage in comparison with the base-emitter voltage of the main transistor. Third, the components in a reverse drive circuit must have similar ratings to those in the forward drive circuit, because the peak current required is of the same order of magnitude as the forward current, even though the average power is much lower, and fourth, isolating opto-couplers with sufficiently fast responses are expensive and have a low output which, in turn, can give rise to interference problems.

Another prior art solution employs transformer coupling between the base current control circuit and the base-emitter circuit of the power switching transistor. Disadvantages of this solution are that it is difficult to obtain a satisfactorily short rise time in a transformer capable of adequately handling the required output current for the full duration of the conduction period, and the duty cycle ratio may make it difficult to reset the transformer flux during the non-conduction period.

According to the invention there is provided base current control means for a switching transistor comprising series connected switching regulator means having input terminals for connection to a d.c. current supply source and responsive to a first switching control signal to control the magnitude of the base current, and inverter means connected in series with the regulator means and operatively responsive to a second switching control signal to control the base current with respect to time to supply a switching transistor forward drive base current to a base current output terminal.

According to a further feature of the invention there is provided base current control means further comprising reverse base drive current control means connected in series with the regulator means and in parallel with the inverter means and operatively responsive to a third switching control signal to supply a switching transistor reverse drive base current pulse to the base current output terminal.

For a better understanding of the present invention and to show how the same may be carried into effect reference will now be made, by way of example, to the accompanying drawings in which:-

Fig. 1 is a circuit diagram of a switching transistor base current control circuit including forward base current and reverse base current drive means,

Fig. 2 shows typical base current and voltage waveforms for the circuit of Fig. 1,

Fig. 3 illustrates a typical bridge inverter arrangement of switching transistors,

Fig. 4 shows the base drive current waveforms for the two switching transistors in one half of the bridge arrangement of Fig. 3,

Fig. 5 shows in block diagram form the base drive control arrangement for a complete inverter bridge,

Fig. 6 shows a block diagram of a control arrangement alternative to that shown in Fig. 5, and

Fig. 7 shows an alternative base drive arrangement for an inverter bridge employing a separate current regulator for each bridge transistor.

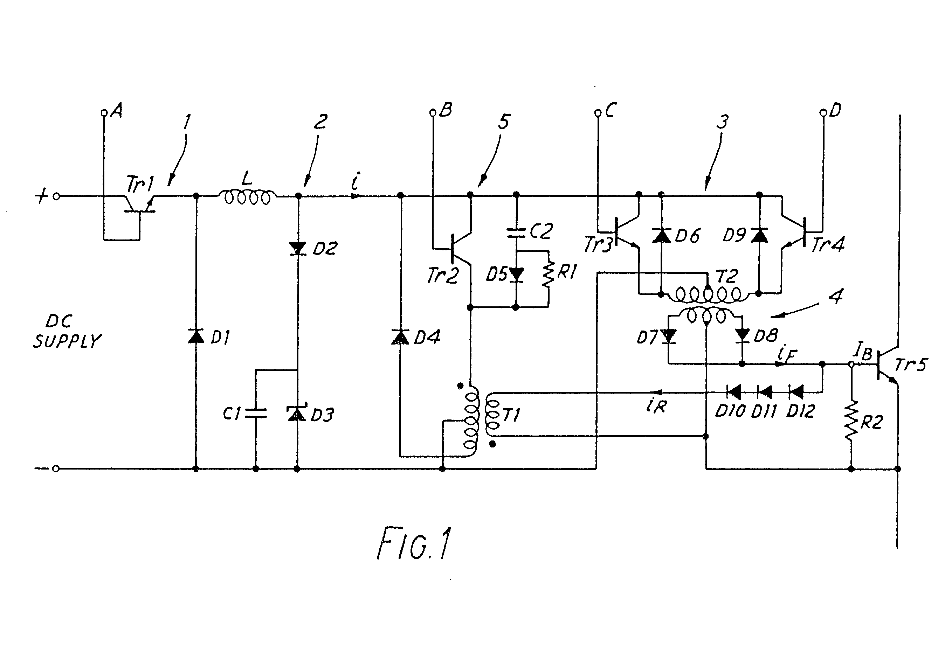

Referring first to Fig. 1 of the drawings, there is shown a base drive current control circuit for a switching transistor Tr5 comprising, as generally indicated by their respective references, a switching regulator means 1, a fast-acting voltage-limiting circuit 2, an inverter 3 and a full-wave rectifier 4 connected in series to an output terminal $I_B$ and the base of transistor Tr5. A current pulse generating means 5 is also connected to the base of transistor Tr5 in parallel with the inverter 3 and rectifier 4 but in series with the switching regulator 1 and voltage-limiting circuit 2.

The switching regulator 1 consists of a pair of supply terminals marked + and -, to which a d.c. current supply (not shown) is connected. The current path from the + terminal is connected to the collector of an NPN transistor Tr1 and via its emitter to an inductor L. The base of transistor Tr1 is connected to an external control terminal A. The cathode of a free-wheel diode D1 is connected to the emitter-inductor junction and its anode to the return current path to the -terminal. The opposite terminal of inductor L is connected to the voltage- limiting circuit 2 comprising a forward conducting diode D2 and a reverse conducting zener diode D3 in series between the supply and return current paths and a capacitor C1 in parallel with zener diode D3.

The current path through transistor Tr1 and inductor L is further connected in the inverter 3 to the collectors of NPN transistors Tr3 and Tr4. The emitters of these transistors are connected to opposite end terminals of the primary winding of transformer T2. The current path through the inverter 3 is completed by a return connection between a centre tapping on the primary winding to the supply terminal-. Reactive feedback diodes D6 and D9 are connected across the collector-emitter junctions of transistors Tr3 and Tr4 which also have their base terminals connected to external control terminals C and D respectively.

The full wave rectifier 4 comprises the secondary winding of transformer T2 opposite ends of which are connected to the anodes of diodes D7 and D8 respectively which have their cathodes joined to a common current path at $I_B$ to the base terminal of NPN transistor Tr5. The base current circuit of transistor Tr5 also includes a connection between a centre tap on the secondary winding of transformer T2 and the emitter of transistor Tr5 and also a resistor R2 between the base and emitter terminals of Tr5.

As previously mentioned in parallel with the inverter 3 and rectifier 4 is current pulse generating means 5 which consists of a further NPN transistor Tr2 in series with half the primary winding of a transformer T1 connected across the output of the switching regulator 1 and voltage-limiting circuit 2. The base of transistor Tr2 is connected to an external control terminal B and the second half of the primary winding of transformer T1 is returned through a diode D4 to the current supply path and collector of transistor Tr2. A transient suppression circuit is further connected between the collector and emitter terminals of transistor Tr2 comprising a capacitor C2 in series with a parallel combination of a diode D5 and a resistor R1.

The output of current pulse generating means 5 is taken via the secondary winding of transformer T1, sensed as shown in Fig. 1, a series of three diodes D10, D11 and D12 in which the anode of D12 is connected to the base of transistor Tr5 and the cathode of D10 is connected to one end of the secondary winding and through a connection between the opposite end of the secondary winding and the collector of Tr5.

The reactive feedback diodes D6 and D9 are preferably included in order to return energy stored in the leakage inductance of transformer T2. The terminals C and D connected to the bases of transistors Tr3 and Tr4 are controlled by respective anti-phases of a switching control signal. Thus, forward base drive current $i_F$ supplied to transistor Tr5 can be independently controlled according to a desired time-pattern, while the magnitude of the current is determined by the switching ratio of a control signal applied to the terminal A in the input switching regulator. At the end of a forward conduction period, a reverse current pulse $i_R$ is generated by the pulse generating means 5 in response to a further control signal applied to terminal B rendering transistor Tr2 conducting and thereby connecting half the primary

winding of transformer Tl across the output of the switching regulator 1.

In operation of the circuit of Fig. 1 forward base drive current to transistor Tr5 is provided by the inverter 3 and rectifier 4. The inverter 3 is operated by the signals at terminals C and D at a frequency higher than the switching frequency of the transistor Tr5. The source of the base drive current is a d.c. supply connected between the terminals + and -. Control of the output of inverter 3 which determines the switching sequence of transistor Tr5 is effected by appropriate switching of the input to the transformer T2. The magnitude of the output, i.e. of the base drive current is determined by the d.c. input current to the inverter which, in turn, is controlled by the mark to space ratio of the switching signal applied at the terminal A to the base of transistor Tr1 so that it corresponds to the base current requirement of transistor Tr5. The fast-acting voltage-limiting circuit 2 operates to limit the output voltage of regulator 1 if for any reason the load on the regulator does not accept the current which is maintained in the inductor L.

A reverse current pulse is delevered by the pulse genrating means 5 when required in response to a control signal at terminal B, at the same time forward drive inverter 3 is de-energised. The diode D4 operates to return energy stored in the leakage inductance of T1 to the current supply at the end of the reverse pulse.
The transient suppression circuit, of resistor R1,
capacitor C2 and diode D5 is provided if suppression
at this point is necessary. Since, the reverse base
current required for transistor Tr5 is equal to or
a proportion of the forward base drive current it is
derived conveniently from the same source via the
regulator 1 and voltage-limiting circuit 2.

A base drive current control circuit according to the
present invention effectively provides a current-controlled
high impedance d.c. source supplying an inverter
according to the output i.e. switching transistor
drive current requirements. Thus, the power loss entailed
in supplying a required base drive current can be
minimised by regulating the input current to the inverter
3 at an optimum level relative to the collector
current in the switching transistor Tr5. The base drive
current could be made an appropriate fraction of the
maximum instantaneous collector current to be passed
by transistor Tr5, or of the peak current to be passed
under a particular load condition, or, for the lowest
possible loss, of the instantaneous collector current.
In practical embodiments of the invention described below
with reference to Figs. 3 to 7 it was preferred because
of the non-linearity of transistor characteristics to
make the forward current approximately proportional to
the sum of the square of the collector current and a
small constant current term allowing for inaccuracies
of current sensing and zero current nulling. Accordingly the mark to space ratio of the switching signal applied at base terminal A of the regulator transistors Tr1 is a function of the square of the collector current of bridge transistors plus the small constant term.

An arrangement according to the invention provides an efficient means of controlling the base drive current, since there is little power loss in the switching regulator 1 which, also, advantageously can be connected to a relatively high voltage d.c. supply, as compared to the low voltage level of the switching transistor base circuit.

The method of base current control provided by the invention, coupled with the energy stored in the inductor L, ensures a rapid response to changing demands by the base-emitter circuit of the switching transistor Tr5. At the beginning of a forward drive period, in spite of the relatively high transient base-emitter voltage as a result of the dynamic characteristics of the base-emitter junction, a high net voltage is available to drive current through the leakage inductance of transformer T2, thus producing a short base current rise time. Similarly, the change from forward to reverse current is achieved rapidly by virtue of the forced transfer of current from the forward drive inverter 3 to the reverse drive transformer T1.

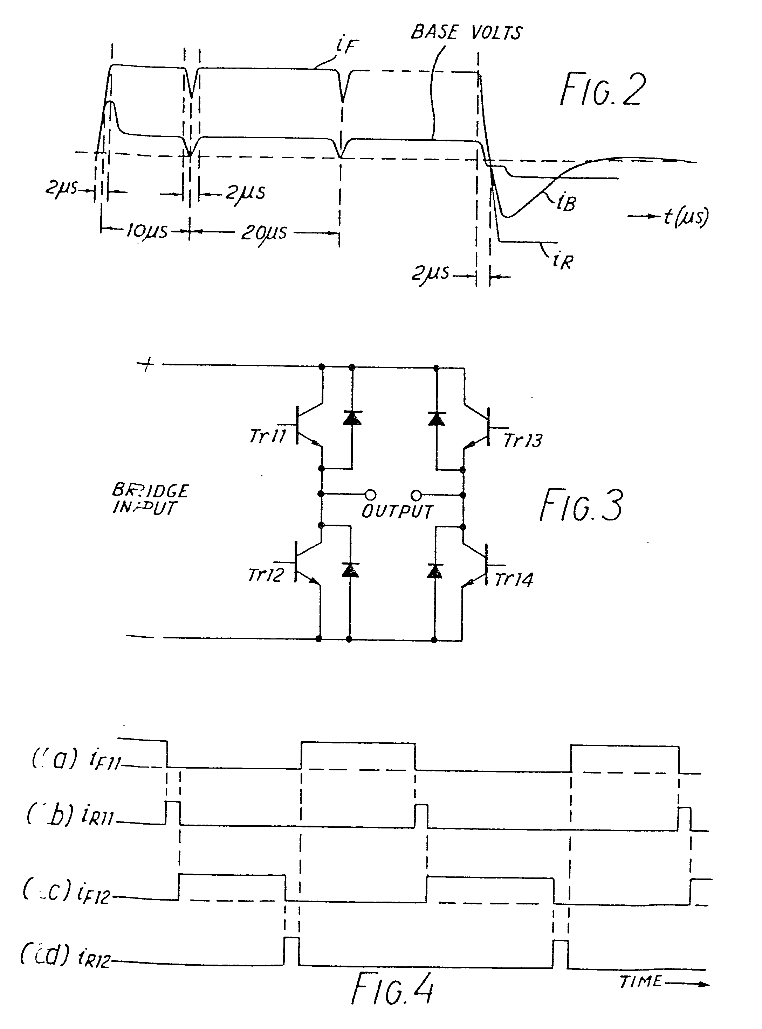

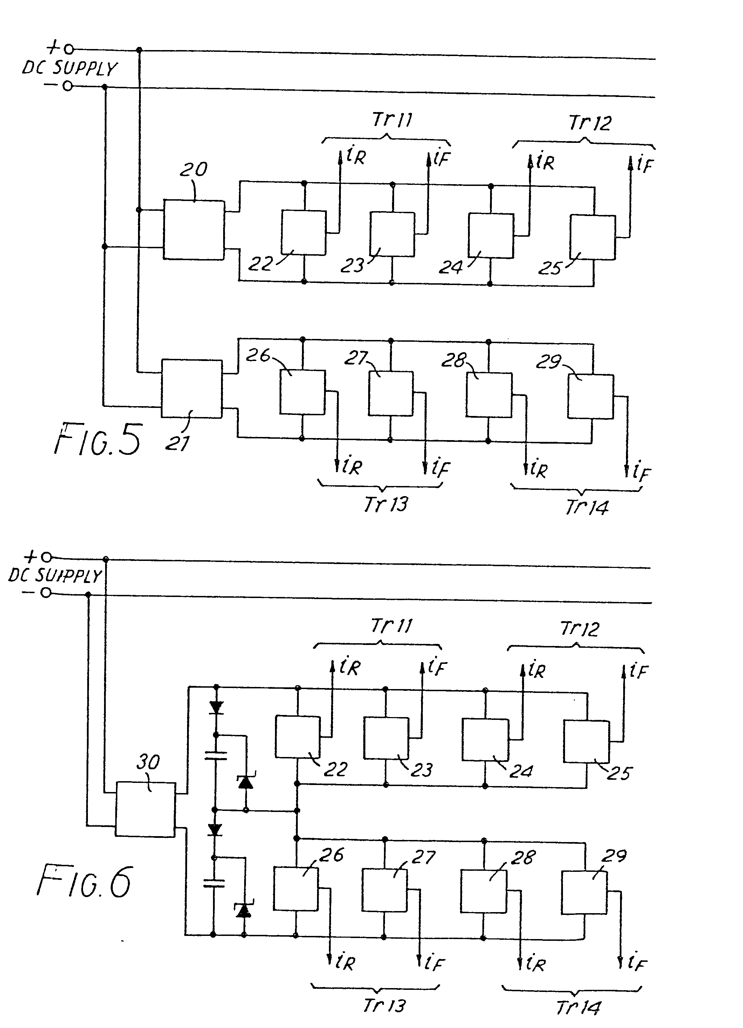

Fig. 2 shows typical waveforms of forward base current $i_F$, reverse pulse base current $i_B$ and base voltage in one embodiment for a power transistor having rise
and fall times of the order of 2 μ S.  In this embodiment
the inverter operates at 25kHz., producing commutation
notches of approximately 2 μS duration in the rectified
output at 20 μS. intervals.  Because of the switching
time of the main transistor Tr5, these commutation notches
have no effect.  In the first half-cycle of operation,
the second switching control signal to the inverter
transistors at terminals C and D is of only half the
duration of a normal cycle.  The purpose of this,
although not essential, is to avoid saturation of the
transformer T2 core, the core material used in this
example being one with low remanence so that each period
of forward base drive is begun with nearly zero flux.

Fig. 3 shows a pulse-width-modulated bridge inverter
comprising four switching transistors Tr11, Tr12,
Tr13 and Tr14 (each of which corresponds to a transistor
such as Tr5 in Fig. 1) connected in series pairs across
a d.c. supply (not shown) connected to the bridge input
terminals + and -.  Opposite transistors in the bridge
are driven by base current circuits
in accordance with the invention.  Thus, the conduction
periods of transistors Tr11 and Tr12 alternate, and
similarly the conduction periods of Tr13 and Tr14
alternate with only short intervals between the forward
drive periods during which reverse drive pulses are
applied.

Fig. 4 schematically illustrates the base drive voltage waveforms for the pairs of transistors Tr11, Tr14 and
Tr12, Tr13 in Fig. 3. The forward base drives are
shown respectively at (a) and (c) and it will be seen
from these waveforms that there are short gaps between
the conduction periods during which the reverse base
drive pulses shown in waveforms (b) and (d) occur. Thus,
the total drive current demand for each pair of transistors
is substantially constant and the four drive circuits
required for each pair can be supplied from one input
switching regulator. One form of complete drive
system of this type for the bridge inverter is shown
in Fig. 5. For convenience the timing circuits for
first, second and third switching control signals are
not shown.

In Fig. 5, blocks 20 and 21 representing switching
regulators, comprising the regulator 1 and limiting
circuit 2 of Fig. 1, are connected in parallel to a
common d.c. supply. The drive circuits for alternatively
operated transistors Tr11 and Tr12 comprise forward
drive circuits 23 and 25, each of which consist of an
inverter 3 and rectifier 4 as in Fig. 1, and reverse
drive circuits 22 and 24 consisting of the reverse
pulse generating means 5 of Fig. 1. All of the circuits
22, 23, 24 and 25 are connected in parallel to the
output of regulator 20. Similarly, forward and reverse
drive circuits 26, 27 and 28, 29 for alternatively
operated transistors Tr13 and Tr14 respectively, are
connected in parallel to the output of parallel regulator
21.

The timing circuits for producing the control signals for connection to terminals A, B, C and D are omitted from the drawing for clarity. Essentially these comprise pulse circuits, e.g. monostable pulse circuits or the like, and appropriate delay circuits actuated by the conventional bridge gating pulses to produce forward and reverse drive control signals for terminals B, C and D. In addition, the switching regulator control signal for terminals A is produced by a controllable oscillator the mark to space ratio of which is determined by a function of the ambient current level, the maximum current level or, the square of the current level as previously mentioned.

In an alternative arrangement shown in Fig. 6, in which with respect to Fig. 5 like parts are given like references, one regulator 30 comprising circuits 1 and 2 of Fig. 1 is used to supply the two groups of drive circuits 22 to 29 connected in series.

In such arrangements of bridge inverters as those illustrated in Fig. 5 and Fig. 6, in which the total base drive power demand is substantially constant, the voltage-limiting circuit (D2, D3, C1 of Fig. 1) has only to cater for transient conditions when, for example, the fall of current in one drive circuit does not overlap with the rise of current in the next. In other cases, such as d.c. chopper regulators, the current demand will vary cyclically, and the voltage-limiting avalanche diode will have to dissipate considerable power at certain times. In such cases, considerable savings may be obtained by connecting a switching device, i.e. a further transistor across the output of the regulator to provide an alternative current path when neither the forward nor reverse drive circuits are drawing current, the control signals to this further transistor being appropriately timed in relation to those of the drive circuits. Alternatively, this function may be performed by the reverse drive transistor Tr2, preferably with the reverse drive transformer Tl designed to saturate when a drive pulse of adequate duration has been delivered.

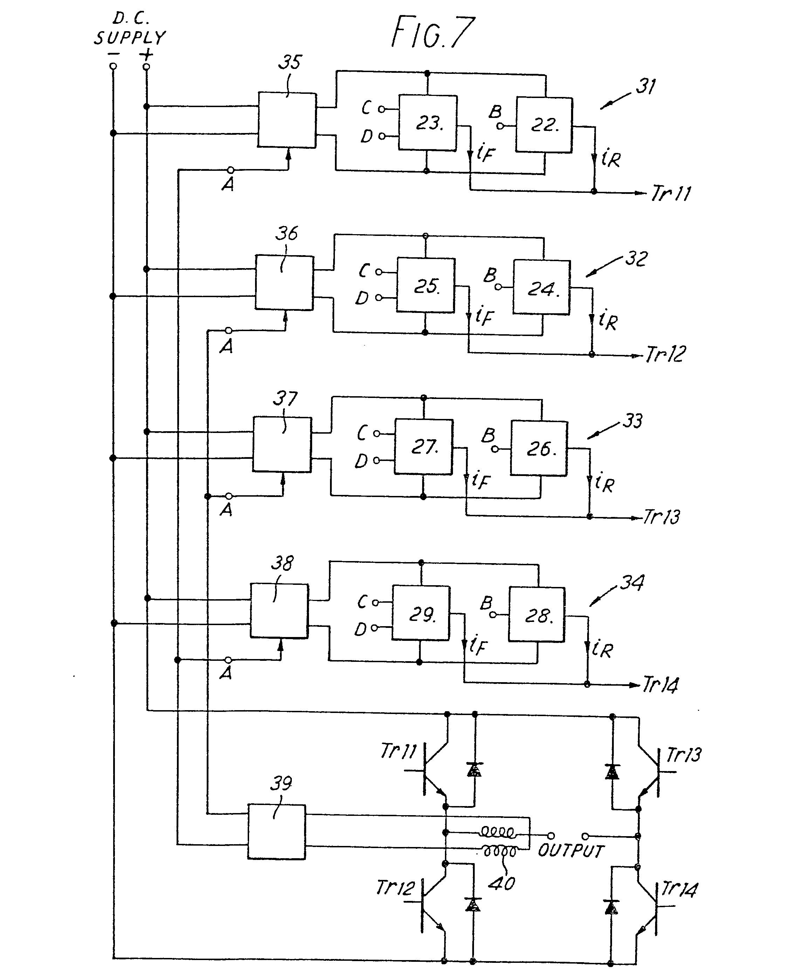

In another alternative arrangement illustrated in Fig. 7, in which like parts with respect to Figs. 5 and 6 have like references, a separate base current control circuit is employed to drive a respective one of the inverter bridge transistors Trll, Trl2, Trl3 and Trl4. In this arrangement a current source (not shown) is connected between the supply terminals + and - to which are connected in parallel four base current control circuits, generally indicated at 31, 32, 33 and 34, which control inverter bridge transistors Trll, Trl2, Trl3 and Trl4 respectively. Each base current control circuit includes a combined input switching regulator with voltage limiting circuit 35, 36, 37 and 38 respectively and associated reverse and forward current generating means 22 and 23, 24 and 25, 26 and 27, and 28 and 29. In common with the arrangements of Figs. 5 and 6 the switching control signals connected to terminals B and, C and D are generated by timing circuits not shown. The switching signal terminals A of the variable ratio switching regulators of 35 and 38 are connected to one switching signal line and the terminals A of the regulators of 36 and 37 are connected to a second switching signal line. Signals on the two switching signal lines are supplied by a control circuit 39. The input to circuit 39 is connected to the secondary winding of a current-sensing transformer 40 the primary winding of which is in series with one bridge output terminal. In circuit 39 the square of the sensed current value is compared with a further signal representing the output current of regulator 1 (obtained by further current sensing means not shown) to produce an error signal. This error signal constitutes the output of circuit 39 appropriately routed via the correct line to the switching regulatirs. The error signal controls the pulse width or switching ratio of the switching signal operating each regulator so as to produce at the regulator output the voltage necessary to produce the required current.

In a further embodiment the control circuit 39 operates to produce an error signal proportional to the difference between the value of the instantaneous collector current of the switching transistor, sensed by transformer 40, and the magnitude of the base current supplied by the switching regulator 1. The pulse width is therefore adjusted to the level necessary to control the regulator so as to produce the required base current taking into account the gain of the switching transistor Tr5.

In operation of the Fig. 7 arrangement the base current control circuits 31, 32, 33 and 34 function as previously described under the control of the signals on terminals A, B, C and D. The signals from circuit 39 to terminals A of regulators 35, 38 are supplied on a separate line to those for regulators 36, 37. As the bridge transistors associated these regulators, that is Tr11, Tr14 and Tr12, Tr13 alternate in conduction the bridge produces an alternating output current which is sensed by transformer 40. The sign of this current is lost in the squaring function operation of circuit 39 which therefore contains additional signal steering logic circuits which direct the variable pulse-width signals to the appropriate regulators as necessary. Since each base current circuit has its own input switching regulator the reverse (turn-off) pulses for two of the bridge transistors may be generated in overlapping relationship with the forward (turn-on) drive waveforms of the remaining two bridge transistors. Thus, it is possible to ensure that, in a series connected pair of transistors, one transistor is completely turned-off before the other one is turned-on.

During the periods when no base drive is required, the outputs of the regulators are preferably short-circuited as previously described. Also, in connection with reverse pulse generating means 5, it has previously been mentioned that the primary winding of transformer T1
is centre-tapped so that half the winding is connected
in series with the switching means, transistor Tr2.
It will be apparent that such a tapping of the transformer
need not be a centre-tapping and that division of the
primary according to a convenient ratio is permissible.

0030855.

CLAIMS:

1. Base current control means for a switching transistor (Tr5) comprising a pair of terminals (+ and -) for connection to a d.c. current supply source, a base drive current output terminal ($I_B$) and control means connected therebetween being responsive to control signals to control the base drive current, characterised in that the control means comprises switching regulator means (1) responsive to a first switching control signal at first terminal (A) to control the magnitude of the base current ($i_F$), and connected in series therewith inverter means (3) responsive to a second switching control signal at a second terminal means (C, D) to control the amplitude with respect to time of the base current ($i_F$).

2. Base current control means as claimed in Claim 1 characterised in that the first switching control signal (A) is pulse width modulated.

3. Base current control means as claimed in Claim 2 characterised in that the pulse width of the control signal is dependent on the difference between a signal proportional to the square of the collector current of the switching transistor and a quality proportional to the magnitude of the base current.

4. Base current control means as claimed in Claim 2 characterised in that the pulse width of the first control signal is a function of the difference between a signal proportional to the instantaneous collector current of the switching transistor and a quality proportional to the magnitude of the base current.

5. Base current control means as claimed in any preceding claim characterised in that the switching regulator means (1) comprises a transistor (Trl) connected in series with a d.c. current supply input terminal (+) and the base of which is connected to receive the first switching control signal at a first terminal (A).

6. Base current control means as claimed in any preceding claim characterised in that rectifier means (4) is connected between the output of the inverter means (3) and the base current output terminal ($I_B$).

7. Base current control means as claimed in any preceding claim characterised in that reverse drive pulse generating means (5) is connected in series with the switching regulator means (1) and in parallel with the inverter means (3) to the base current output terminal ($I_B$) and responsive to a third switching control signal at a third terminal (B) to generate a reverse drive current pulse ($i_R$).

8. A transistor bridge inverter comprising four bridge connected switching transistors (Tr11, Tr12, Tr13 and Tr14) characterised in that each is operatively connected to receive base drive current from the output terminal ($I_B$) of base current control means as claimed in any preceding claim.

9. A transistor bridge inverter as claimed in Claim 8 characterised in that the base current control means connected to drive the bridge transistors (Tr11, Tr12, Tr13 and Tr14) includes an inverter means (3) associated with each bridge transistor and a switching regulator means (1) connected in common to the inverter means (3) associated with each pair of simultaneously switched bridge transistors (Tr11, Tr14 and Tr12, Tr13).

10. A transistor bridge inverter as claimed in Claim 8 characterised in that the base current control means connected to the bridge transistors (Tr11, Tr12, Tr13 and Tr14) includes an inverter means (3) associated with each bridge transistor and a switching regulator means (1) connected in common to all inverter means.

11. A transistor bridge inverter as claimed in Claim 8 characterised in that the base current control means connected to the bridge transistors includes an inverter means (3) associated with each bridge transistor and a respective switching regulator means (1) connected to each inverter means.

FIG.1

0030855

BASE VOLTS

$i_F$

FIG.2

$2\mu s$          $2\mu s$

$10\mu s$     $20\mu s$

$i_B$

$t(\mu s)$

$i_R$

$2\mu s$

+

BRIDGE INPUT

Tr11          Tr13

OUTPUT          FIG.3

Tr12          Tr14

(a) $i_{F11}$

(b) $i_{R11}$

(c) $i_{F12}$

(d) $i_{R12}$

FIG.4          TIME

FIG.5

FIG.6

0030855

FIG.7